(19) **Europäisches Patentamt**
**European Patent Office**
**Office européen des brevets**

(11) **EP 1 626 791 B1**

(12) **EUROPEAN PATENT SPECIFICATION**

(45) Date of publication and mention
of the grant of the patent:
**12.08.2009 Bulletin 2009/33**

(51) Int Cl.:
***B01D 17/02*** *(2006.01)* ***G03G 15/10*** *(2006.01)*

(21) Application number: **03727911.4**

(22) Date of filing: **15.05.2003**

(86) International application number:
**PCT/IL2003/000404**

(87) International publication number:
**WO 2004/101102 (25.11.2004 Gazette 2004/48)**

(54) **FLUID SEPARATION SYSTEM**

VORRICHTUNG ZUR FLUIDTRENNUNG

SYSTEME DE SEPARATION DE FLUIDES

(84) Designated Contracting States:
**DE FR GB**

(43) Date of publication of application:
**22.02.2006 Bulletin 2006/08**

(73) Proprietor: **HEWLETT-PACKARD DEVELOPMENT COMPANY, L.P.**
**Houston, TX 77070 (US)**

(72) Inventor: **DRIGGERS, Matt, G.**
**Vancouver,**
**Washington 98683-8906 (US)**

(74) Representative: **Lippich, Wolfgang**
**Samson & Partner**
**Patentanwälte**
**Widenmayerstrasse 5**
**80538 München (DE)**

(56) References cited:
**EP-A- 0 969 332**      **EP-A- 0 969 332**
**WO-A-01/83074**       **WO-A-92/19349**
**WO-A-98/050163**      **WO-A1-01/83074**
**WO-A1-92/19349**      **WO-A1-98/50163**
**GB-A- 2 261 658**      **GB-A- 2 261 658**
**US-A- 4 492 630**      **US-A- 4 492 630**
**US-A- 4 689 155**      **US-A- 4 689 155**
**US-A- 5 202 031**      **US-A- 5 202 031**
**US-A- 5 368 747**      **US-A- 5 368 747**
**US-A- 5 708 938**      **US-A- 5 708 938**

- **PATENT ABSTRACTS OF JAPAN vol. 007, no. 228 (P-228), 8 October 1983 (1983-10-08) & JP 58 116560 A (CANON KK), 11 July 1983 (1983-07-11)**
- **PATENT ABSTRACTS OF JAPAN vol. 007, no. 228 (P-228), 8 October 1983 (1983-10-08) & JP 58 116560 A (CANON KK), 11 July 1983 (1983-07-11)**
- **PATENT ABSTRACTS OF JAPAN vol. 007, no. 228 (P-228), 8 October 1983 (1983-10-08) & JP 58 116560 A (CANON KK), 11 July 1983 (1983-07-11)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates generally to separating fluids of different specific gravities.

### BACKGROUND OF THE INVENTION

Many different systems for separating immiscible fluids of different specific gravities have been introduced over the years. These systems are useful for example in the disposal of water contaminated by other fluids such as oil, gasoline and antifreeze. In some cases such systems allow collecting both fluids.

Typically these systems comprise two separate sides with a fluid path connecting them on the bottom. One side receives the mixture of the contaminated fluid. The lighter fluid rises to the top of the receiving side and the other side typically contains the heavier fluid. Outlets on each side allow discharge of the separated fluids.

US patent 4,689,155 to Knowlton describes a method for purifying oil contaminated with both solids and water. The water is drained from the bottom of a separating vessel.

The mixture of the contaminated fluid is supplied to the device at a rate at which the system can separate the fluids in order to receive the correct fluids at the outlets. US patent 5,637,234 to McCasland, describes apparatus and method for separating fluids having different specific gravities and for increasing the rate of separating the fluids.

In some cases, in the separation system, at the interface between the lighter fluid and the heavy fluid, a fungus or combination fluid or other undesired material (such as colorants or other materials) develops or is collected (trapped), which is heavier than the light fluid and lighter than the heavy fluid. The waste is typically removed by emptying out the system or by dismantling it

In liquid toner printing systems, especially those in which the liquid toner is heated during the printing process, carrier liquid, which is lighter than water, is evaporated. Since this material is generally a hydrocarbon whose release into the atmosphere is restricted, some prior art systems have been known to condense the carrier liquid, together with moisture from a system enclosure, prior to venting air from the enclosure to the outside.

In US 4,538,899, carrier liquid evaporated from printed sheets, which may be mixed with water vapor is catalytically oxidized to provide a hot vapor. The hot vapor is used to heat a substrate to fix an image thereon.

EP0969332 and US5708938 show a printing device including a system for separating by gravity a mixture of ink and water.

### SUMMARY OF THE INVENTION

The invention relates to a separation system of a printing system with a waste outlet that allows draining the waste that develops between the lighter fluid and the heavier fluid according to claim 1. In some embodiments of the invention, the waste outlet is positioned directly below the position of the interface between the two fluids. In some embodiments of the invention the mixture is supplied at a high inlet above the waste outlet. Alternatively, the mixture is supplied at a low inlet below the waste outlet. In some embodiments of the invention, the position of the inlet is selected according to the fluid that is more preferentially being salvaged. For example in a water-oil system, a high inlet is preferred for salvaging oil and a low inlet is preferred for salvaging water.

In an exemplary embodiment of the invention, the system is constructed with a secondary outlet for one or both of the fluids in order to protect the system from a clogged outlet and/or backflow of the fluid from its primary outlet. In some embodiments of the invention, the secondary outlet is positioned above the primary outlet. Alternatively, the secondary outlet is positioned at the same level, adjacent or opposite the primary outlet.

In some embodiments of the invention, the system is constructed with a secondary purifying level for one or both of the fluids, to reach a higher level of purity of the fluid.

The system for separating a mixture of two fluids of different specific gravities comprises:

   a first chamber having an inlet for receiving said mixture;
   a second chamber having a connection for receiving the fluid with the higher specific gravity of said mixture from said first chamber, said connection being situated between a portion of the two chambers below the inlet; and
   a waste outlet in said first chamber to drain residue situated at an interface between the two fluids.

Optionally, the inlet is above said fluid interface. Alternatively, the inlet is below said fluid interface.

The system includes a first outlet for the fluid having the lower specific gravity in the reception chamber. The system comprises a second outlet for the fluid having the higher specific gravity, in the second chamber. Optionally, the system comprises a third outlet in the second chamber, above the second outlet. Optionally, the third outlet is at the same height as the first outlet. Alternatively, the third outlet is at a lower height than the first outlet.

In an embodiment of the invention, the system comprises a second outlet for the fluid having the higher specific gravity in the second chamber. Optionally, the system comprises a third outlet in the second chamber, above the second outlet.

In an embodiment of the invention, the system comprises a separation unit connected to the first outlet. In an embodiment of the invention, the system comprises a fourth outlet from the first chamber, the fourth outlet being higher than the first outlet

In an embodiment of the invention, the system comprises a second level separation unit connected to the outlet of the fluid having the higher specific gravity. Optionally, the system comprises a drain outlet for the separation unit.

There is further provided, a system for separating a mixture of two fluids of different specific gravities comprising:

a first chamber having an inlet for receiving said mixture;

a second chamber having a connection for receiving the fluid having the higher specific gravity of said mixture from said first chamber, said connection being situated between a portion of the two chambers below the inlet;

a first outlet in the second chamber for the fluid having the higher specific gravity;

a second outlet in the first chamber for the fluid having the lower specific gravity, said second outlet being higher than the first outlet; and

at least one additional outlet comprising one or both of

a) an additional outlet in the second chamber, said additional outlet being higher than said first outlet and lower than said second outlet; and
b) an additional outlet in the first chamber, said additional outlet being higher than said second outlet.

Optionally, the at least one additional outlet comprises an additional outlet in the second chamber, said additional outlet being higher than said first outlet and lower than said second outlet.

Optionally or additionally, the at least one additional outlet comprises an additional outlet in the first chamber, said additional outlet being higher than said second outlet.

The printing system comprises:

an enclosure;

a printing engine within said enclosure, in which liquid ink comprising a carrier liquid is used to produce images, some of said carrier liquid being evaporated during printing;

a condenser that condenses liquid carrier from within the enclosure, together with moisture from air in the enclosure;

a separator system that receives the condensed mixture of carrier liquid and moisture and separates the carrier liquid from the moisture.

A conduit that delivers the separated carrier liquid to the printing engine for reuse. In an embodiment of the invention, the liquid ink is a liquid toner and wherein the liquid toner is heated during the printing, evaporating the carrier liquid.

In an embodiment of the invention, the carrier liquid is a liquid hydrocarbon.

## BRIEF DESCRIPTION OF THE DRAWINGS

Particular non-limiting embodiments of the invention will be described with reference to the following description of embodiments in conjunction with the figures. Identical structures, elements or parts which appear in more than one figure are preferably labeled with a same or similar number in all the figures in which they appear, in which:

Fig. 1 is a schematic illustration of a separation system with a low inlet according to an exemplary embodiment of the invention;
Fig. 2 is a schematic illustration of a separation system with a high inlet according to an exemplary embodiment of the invention;
Fig. 3 is a schematic illustration of a separation system with secondary outlets according to an exemplary embodiment of the invention;
Fig. 4 is a schematic illustration of a separation system with a secondary purifying level according to an exemplary embodiment of the invention;
Fig. 5 is a schematic illustration of an implementation of a separation system according to an exemplary embodiment of the invention; and
Fig. 6 is a very schematic illustration of a liquid toner printing system, in accordance with an embodiment of the invention.

## DETAILED DESCRIPTION OF EXEMPLARY EMBODIMENTS

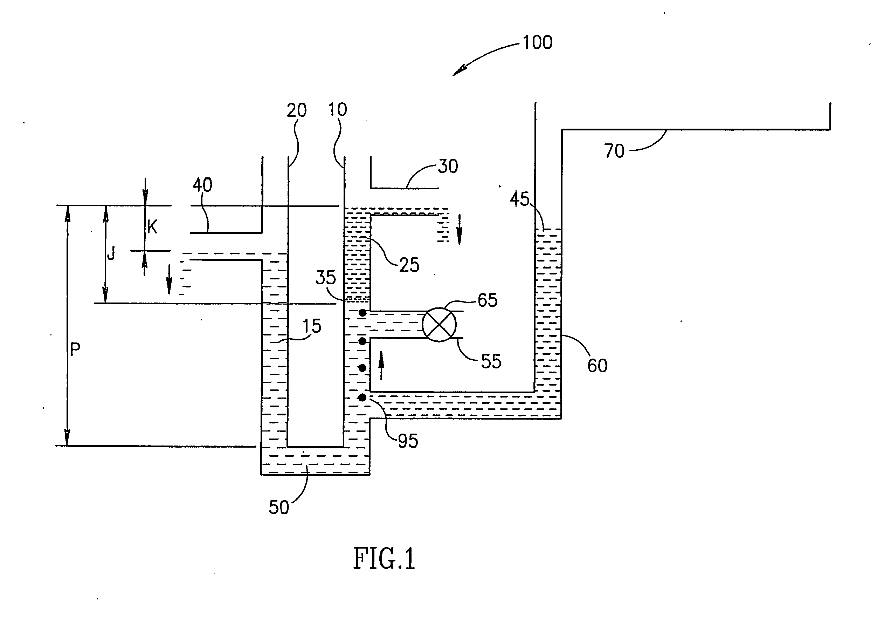

Fig. 1 is a schematic illustration of a separation system 100 according to an exemplary embodiment of the invention. In an exemplary embodiment of the invention, separation system 100 comprises a main chamber 10 and a secondary chamber 20. Main chamber 10 and secondary chamber 20 are connected together at the bottom with a fluid connection path 50. In some embodiments of the invention, chamber 10, chamber 20 and connection path 50 are comprised from a single chamber, in which left and right sides 10 and 20 are separated, for example, by a baffle. In such a case connection path 50 is almost virtual since it is reduced to the width of the separation between the chambers.

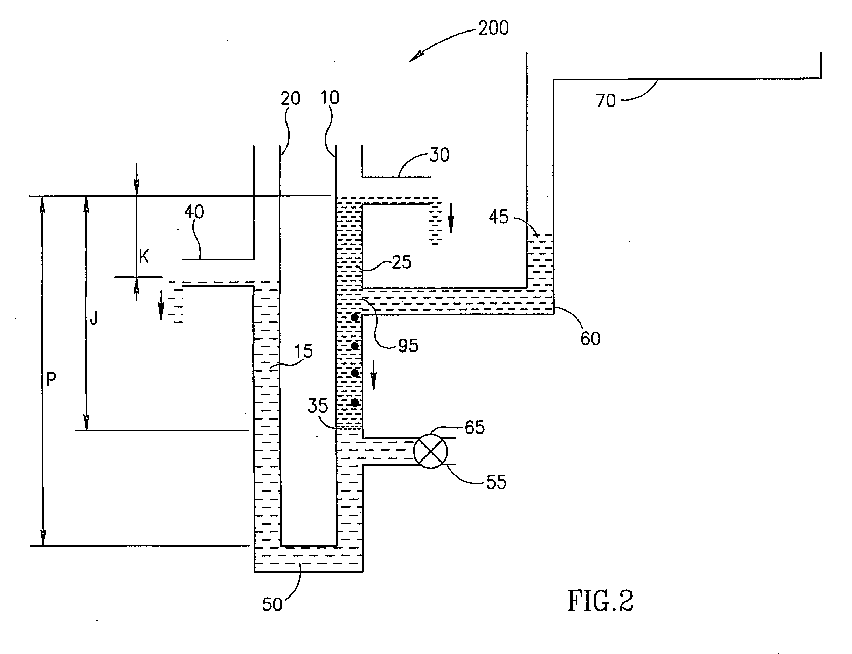

In an exemplary embodiment of the invention, a mixture of fluids 45 with different specific gravities, for example water and oil, are directed to a container 70. Optionally, the mixture is physically, positioned higher than chamber 10 in order for it to be able to flow to separation system 100 by the force of gravity. Optionally, container 70 is connected by a conduit 60 to an inlet 95 on the lower part of chamber 10 above connection path 50. Alternatively conduit 60 is connected to an inlet 95 on the upper part of chamber 10 as described below regarding Fig. 2. However, as indicated in the figure, the level of the input mixture will be between the heights of outlets 30 and 40, based on the amount of each fluid in the mixture.

Optionally a large tray such as container 70 is used to receive the mixture, as for example, when the source of the mixture is a condenser. Alternatively, the mixture can be piped directly into 10.

In an exemplary embodiment of the invention, on the upper part of chamber 10 there is an outlet 30 for the lighter fluid and on the upper part of chamber 20 there is an outlet 40 for the heavier fluid. In some embodiments of the invention, a continuous flow of mixture 45 is supplied to separation system 100. The continuous flow enters chamber 10 and separates itself under the influence of the gravitational force. The heavier fluid 15 (e.g. water) sinks to the bottom of chamber 10 and the lighter fluid 25 (e.g. oil), rises to the top of chamber 10. The heavier fluid 15 flows from chamber 10 through connection 50 to chamber 20 and flows out of outlet 40. Lighter fluid 25 is blocked by the separation between chamber 10 and chamber 20 from spreading through the rest of separation system 100, lighter fluid 25 rises to the top of chamber 10 and flows out through outlet 30.

In some embodiments of the invention, separation system 100 is initialized by filling it with the heavy fluid 15 in order to prevent mixture 45 from reaching chamber 20, which would cause an initial output of some of lighter fluid 25 from outlet 40. Alternatively, the initial flow from outlet 40 is optionally discarded until separation system 100 stabilizes, wherein chamber 20 comprises only heavy fluid 15. To empty the system, a valve (not shown) is conveniently provided at the bottom of passage 50 or at the bottom of chamber 10 or chamber 20. Opening this valve will empty the system.

In an exemplary embodiment of the invention, the top of chamber 10 and/or chamber 20 and/or container 70, are optionally vented to the atmosphere in order to prevent a build up of pressure on the fluids in the chambers. If not so vented, it may be desirable to connect the tops of chambers 10 and 20 to avoid air pressure differentials between the chambers.

In an exemplary embodiment of the invention, at the interface between lighter fluid 25 and heavier fluid 15, a layer 35 comprised of a fungus and/or an amalgam of the fluids or other undesired waste is formed due to a small amount of interaction between the two fluids although they are essentially immiscible. Additionally contaminants which are lighter than the heavier fluid but heavier than the lighter fluid will remain trapped between the two fluids. Layer 35 may comprise a gel.

In some embodiments of the invention, a waste outlet 55 is positioned directly below the position of layer 35, which is defined by the specific gravity of the two fluids. Optionally, waste outlet 55 is closed with a valve 65, which is periodically opened for a short time, in order to dispose of contaminants that are trapped between the fluids.

In an exemplary embodiment of the invention, outlet 30, is positioned at a height P above the top of fluid connection path 50. Optionally, P is selected tall enough to accommodate inlet 95, outlet 55 and outlet 30 with spacing between them to accommodate a buildup of the various fluids between the ports (95, 55, 30). Optionally, a larger value of P will contribute to a finer separation of the fluids, since it allows for a longer flow path before exiting the system outlets. P can be increased if higher flow is desired. In addition, since separation of the fluids takes place in chamber 10, this chamber should be made wide enough (or of a large enough diameter if round) to allow enough time for separation to take place, considering the flow rate.

It should be noted that the system does not have any intrinsic limitation on flow rate. However, as the flow rate is increased, the amount of time the mixture remains in chamber 10 is decreased, so that separation may be incomplete. The dimensions should be adapted to take into consideration the purity desired, the flow rate expected and the speed with which the materials separate.

The position J of the interface between the two fluids in chamber 10 below outlet 30 is determined by the height difference K of outlet 30 and outlet 40 and the value of the specific gravity of the fluids. The following equation shows the resulting relationship:

$$J=K/((SG(H)-SG(L))$$

SG(H) - specifies the specific gravity of the heavy fluid.
SG(L) - specifies the specific gravity of the light fluid.

In an exemplary embodiment of the invention, with water as the heavy fluid (SG(H)=1) and with an oil as the light fluid (e.g., SG(L)=0.75) the vertical distance of the position of the interface between the two fluids from the oil outlet 30 is 4 times the vertical distance of the water outlet from the oil outlet. Optionally, based on such a calculation waste outlet 55 is positioned below the interface position. The height outlet 55 above the top of conduit 50 is chosen to leave a quantity of heavier liquid in chamber 10. When outlet 55 is open, the level of liquid in chamber 20 will fall as will the level of light liquid in chamber 10. If the height of outlet 55 is too low, the lighter liquid will pass into chamber 20, from which it can only be removed by draining the whole system.

Fig. 2 is a schematic illustration of a separation system 200 with a high inlet according to an exemplary embodiment of the invention. In some embodiments of the invention, inlet 95 is positioned on the upper portion of chamber 10, wherein mixture 45 enters separation system 200 into the volume containing lighter fluid 25, as shown in Fig. 2. In a system with a high inlet 95, heavy fluid 15 sinks to the bottom of chamber 10 and light fluid 25 remains in the upper volume. In a separation system 200 with a high inlet 95, the position of the interface 35 between the fluids and correspondingly waste outlet 55 are positioned below inlet 95, in contrast to being above inlet 95 in a separation system 100 with a low inlet 95.

In some embodiments of the invention, purification of one of the fluids is of more important and the other is less important. For example, one of the fluids may be expensive and/or it may be costly or hazardous to discard so it is salvaged for reuse (e.g. an expensive oil). Alternatively or additionally, one of the fluids may be a by-product, which needs to be cleaned to a reasonable level in order to be discarded (e.g. contaminated water).

In some embodiments of the invention, separation system 200 is used to salvage lighter fluid 25 and optionally discard heavy fluid 15. In such a case a high inlet is optionally used as shown in Fig. 2, to prevent lighter fluid 25 from collecting additional contaminants by passing through layer 35. In such a case heavier fluid 15, which is to be discarded will sink down through layer 35. In contrast separation system 100 is optionally used to salvage heavy fluid 15 and optionally discard lighter fluid 25. In separation system 100 a low inlet is used so lighter fluid 25 passes through layer 35 and heavier fluid 15 will optionally, be less contaminated.

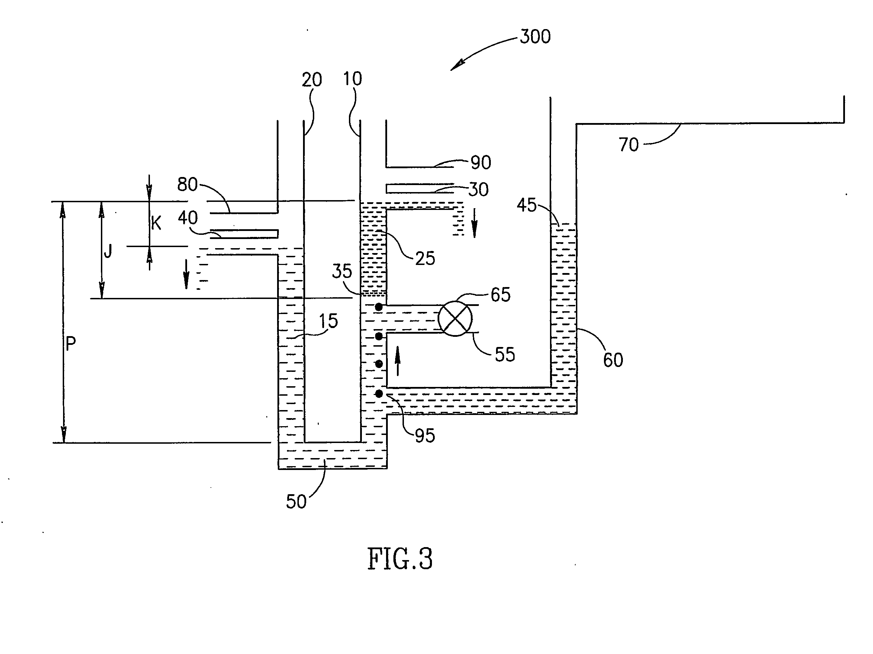

Fig. 3 is a schematic illustration of a separation system 300 with secondary outlets according to an exemplary embodiment of the invention. In some embodiments of the invention, an additional outlet 80 is provided as an auxiliary for outlet 30 and an additional outlet 90 is provided as an auxiliary for outlet 40. The additional outlets 80, 90 serve as safeguard outlets for the respective primary outlets to prevent fluid mixing due to backflow from a disturbance in a primary outlet channel. Alternatively or additionally, the additional outlets serve to overcome clogging in the primary outlet. In some embodiments of the invention, additional outlets 80, 90 are positioned directly above their respective primary outlets, wherein optionally outlets 40 and 80 are positioned lower than outlets 30 and 90, in order to prevent a backup of the denser fluid into the less dense outlet channels. Alternatively or additionally, additional outlets 80, 90 are positioned adjacent to the primary outlet or opposite the primary outlet in the same chamber. Optionally, additional outlets 80, 90, serve in parallel with the primary outlet to provide backup to the fluid flow.

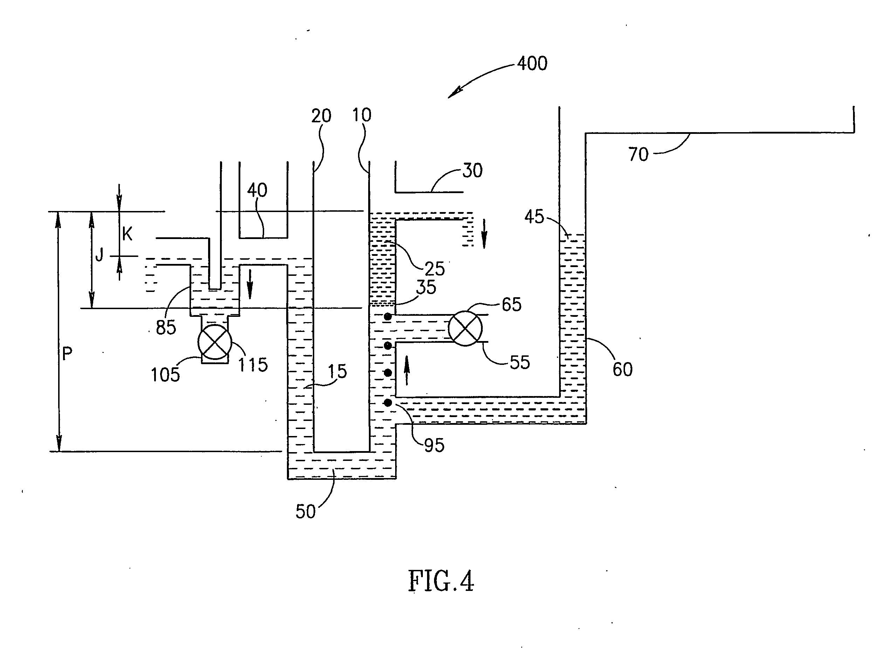

Fig. 4 is a schematic illustration of a separation system 400 with a secondary purifying level according to an exemplary embodiment of the invention. In some embodiments of the invention, separation system 400 comprises a secondary purifying level to enhance the purity of the separated fluids. Fig. 4 shows a secondary purifying level 85 for the heavier fluid. Optionally, secondary purifying level 85 comprises a "U" shaped system of the same size or different size such as provided by the first purifying level.

In some embodiments of the invention, a secondary purifying level can be for the heavier fluid, the lighter fluid or both. In some embodiments of the invention, secondary purifying level 85 blocks any residue of lighter fluid 25 that managed to pass through with fluid 15 to chamber 20 or other contaminants. Optionally, the residue of lighter fluid 25 will be trapped at outlet 40 in chamber 20 as a result of its lighter specific gravity. In some embodiments of the invention, an escape outlet 105 with a valve 115 is added at the bottom of purifying level 85, in order to allow periodic drainage of the trapped residue of lighter fluid 25 and other contaminants.

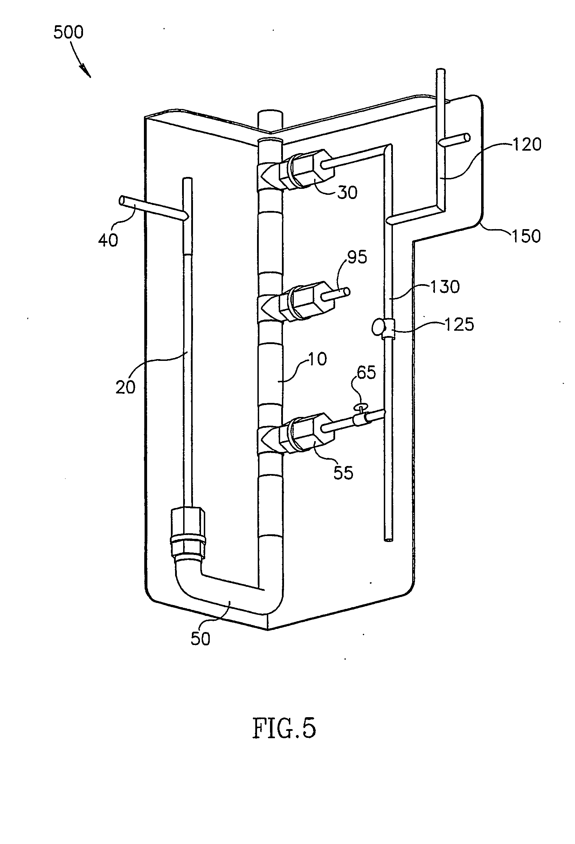

Fig. 5 is a schematic illustration of an implementation of a separation system 500 according to an exemplary embodiment of the invention. Fig. 5 shows separation system 500 constructed from standard plumbing pipes, connectors and fixtures, as known in the art. The plumbing elements may be standard 3/8" 1/2" or 3/4" (or other size) connectors and pipes or may be larger or smaller depending on the size required. The pipe may also be welded or soldered.

In some embodiments of the invention, the system may be very large (e.g. several meters high) or very small (e.g. a few centimeters high), depending on the application.

In some embodiments of the invention, the plumbing elements are comprised from standard plumbing materials as known in the art, for example plastic, rubber, copper and/or other metals or materials that are commonly used.

In an exemplary embodiment of the invention, separation system 500 is supported by being attached to a supporting board 150, to hold the elements of the system in place without relying on separating system 500 to support itself. Optionally, supporting board 150 can be the wall of a building or any solid structure.

As described above for separation system 100, separation system 500 comprises two pipe chambers 10 and 20 connected together on the bottom with a pipe 50. Separation system 500 further comprises a lighter fluid outlet 30, a heavy fluid outlet 40, a mixture inlet 95 and a waste outlet 55 with a valve 65. Optionally, chambers 10 and 20 are vented to the atmosphere to eliminate the buildup of pressure in the chambers.

Similar to the secondary purifying level 85 for the heavy fluid, shown in Fig. 4, separation system 500 is shown with a secondary purifying level 120 for the lighter fluid. Residue of any heavy fluid or other contaminant that managed to exit from outlet 30 will be trapped in a pipe 130, and blocked by a valve 125. By periodically opening valve 125 the residue heavy fluid can be drained out.

It some embodiments of the invention, separating system 100 can be constructed using other methods, for example, using a mold to create it from plastic, glass, asbestos or any other material, the same being flame resistant, if need be.

In some embodiments of the invention, separating system 100 can be heated or constructed with built-in heating elements in order to accelerate the separation process of the fluids.

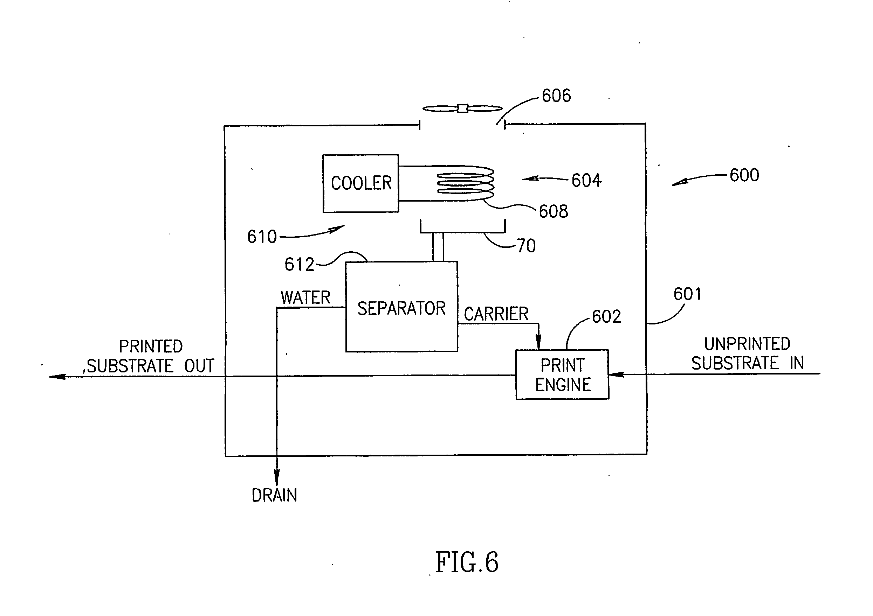

In an exemplary embodiment of the invention, shown very schematically in Fig. 6, a liquid printing system 600, has a print engine 602, utilizing a volatile carrier liquid, which may, for example be, Isopar H, I, J, K or L or other volatile hydrocarbons or other volatile liquids. System 600, generally includes an enclosure 601, for keeping the evaporated liquid from escaping. Of course, openings are provided for the paper input and output, but otherwise, the printer is closed, except for inlets for air. During the printing process the carrier liquid evaporates and exits the printer through a ventilation system, generally shown at 604. By cooling the air that exits through an air exit 606, by passing the evaporated liquid, mixed with ambient air, past a cooling element 608 of a cooling system 610, the carrier liquid, together with water from the ambient air is condensed. The carrier liquid can then be recovered for reuse in the printer and the water purified to an extent that it can be discarded without special precautions being taken. Optionally, a closed system can be constructed, as shown in Fig. 6, in which a separator 612, which allows continuous use of the printer with little or no addition of oil, is part of the printer. Alternatively, the mixture of oil and water is removed and separated outside of the printer. Alternatively, it is separated in the printer, but not used in a closed loop replenishment system.

In an exemplary embodiment of the invention, a separation system such as system 100, 200, 300, 400 or 500 shown in Figs. 1-5 is used as separator 612 to separate the fluids collected from the printing system. The oil collected by the system is reused by the printer and the water is discarded.

**Claims**

1. A printing system comprising:

   an enclosure;
   a printing engine within said enclosure, arranged to use liquid ink comprising a carrier liquid to produce images, some of said carrier liquid being evaporated during printing;
   a condenser for condensing carrier liquid from within the enclosure, together with moisture from air in the enclosure;
   a system for receiving the condensed mixture of carrier liquid and moisture and
   for separating by gravity a mixture (45) of these liquids having different specific gravities, the system comprising:
   a main chamber (10) having an inlet (95) for receiving said mixture (45) and a first outlet (30) from the main chamber (10) for the liquid (25) with the lower specific gravity of said mixture (45);
   a secondary chamber (20) having a connection for receiving the liquid (15) with the higher specific gravity of said mixture (45) from said main chamber (10), said connection being situated between a portion of the two chambers below the inlet (95) and an outlet (40) from the secondary chamber (20);
   **characterised in**
   a waste outlet (55) to drain a residue (35) from the main chamber (10), the waste outlet (55) situated between the first outlet (30) from the main chamber (10) and the connection between the main chamber (10) and the secondary chamber (20).

2. A printing system according to claim 1, wherein said inlet (95) is above said waste outlet (55).

3. A printing system according to claim 1, wherein said inlet (95) is below said waste outlet (55).

4. A printing system according to claim 1-3, comprising a second outlet (80) from the secondary chamber (20), above the outlet (40) from the secondary chamber (20).

5. A printing system according to claim 4, wherein the second outlet (80) from the secondary chamber (20) is at the same height as the first outlet (30) from the main chamber (10).

6. A printing system according to any of claims 1-5, comprising a separation unit connected to the first outlet (3 0) from the main chamber (10).

7. A printing system according to any of claims 1-6, and comprising a second outlet (90) from the main chamber (10), the second outlet (90) from the main chamber (10) being higher than the first outlet (30) from the main chamber (10).

8. A printing system according to any of claims 1-7, comprising a purifying level system (85) for blocking any residue of lighter fluid passed to the secondary chamber connected to the outlet (40) from the secondary chamber (20).

9. A printing system according to claim 6 or claim 8, comprising an escape outlet (105) from the purifying level system (85), wherein the escape outlet (105) is to drain a residue of lighter fluid trapped in the purifying level system.

10. A printing system according to claim 1 wherein the liquid ink is a liquid toner and wherein the printing engine is arranged to heat the liquid toner during the printing, evaporating the carrier liquid.

11. A method of removing waste at the interface of a mixture (45) of carrier liquid and moisture of different specific gravities condensed by a condenser of a printing system, comprising:

directing said mixture (45) into a system for separating these liquids, wherein the system comprises a main chamber (10) connected to a secondary chamber (20) the connection being below an inlet (95) to the main chamber and an outlet (40) from the secondary chamber;
draining residue (35) situated at an interface between these liquids from a waste outlet (55) provided to said system from the main chamber (10); and
draining the liquid (15) with the higher specific gravity through the outlet (40) from the secondary chamber (20).

12. A method according to claim 11 wherein a continuous flow of said mixture (45) is supplied to said system.

13. A method according to claim 11 or claim 12 further comprising initializing separating by first filling said system with the liquid with the heavier specific gravity of the two liquids being separated.

14. A method according to any of claims 11-13 further comprising venting to the atmosphere in order to prevent a build up of pressure on the liquids in said system.

15. A method according to any of claims 11-14 further comprising providing safeguard outlets to prevent liquid mixing due to backflow from a disturbance in a primary outlet.

16. A method according to any of claims 11-15 further comprising purifying said liquids at a secondary purifying level.

17. A method according to any of claims 11-15 comprising purifying the liquid drained from the secondary chamber (20).

18. A method according to any of the claims 11-15 comprising draining the liquid (25) with the lower specific gravity through an outlet (30) from the main chamber (10).

19. A method according to claim 18 comprising purifying the liquid drained from the outlet (30) of the main chamber (10).

20. A method according to claim 11-18 comprising:

heating liquid ink including a carrier liquid; and evaporating the carrier liquid.

21. A method according to claim 20 comprising:

using a liquid hydrocarbon as the carrier liquid.

22. A method according to claim 21 comprising:

reusing the liquid hydrocarbon.

**Patentansprüche**

1. Drucksystem umfassend:

ein Gehäuse;
eine Druckmaschine im Gehäuse, die eingerichtet ist, flüssige Tinte, die eine Trägerflüssigkeit umfasst, zu verwenden, um Bilder zu erzeugen, wobei etwas Trägerflüssigkeit während des Druckens verdampft;
ein Kondensator zum Kondensieren von Trägerflüssigkeit aus dem Gehäuse, zusammen mit Feuchtigkeit aus der Luft im Gehäuse;
ein System zum Empfangen der kondensierten Mischung von Trägerflüssigkeit und Feuchtigkeit und zum Schweretrennen einer Mischung (45) dieser Flüssigkeiten, welche verschiedene Dichten haben, wobei die Vorrichtung umfasst:
eine Hauptkammer (10) mit einem Einlass (95) zum Empfangen der Mischung (45) und einem ersten Auslass (30) aus der Hauptkammer (10) für die Flüssigkeit (25) mit der niedrigeren Dichte der Mischung (45);
eine Sekundärkammer (20) mit einer Verbindung zum Empfangen der Flüssigkeit (15) mit der höheren Dichte der Mischung (45) aus der Hauptkammer (10), wobei sich die Verbindung zwischen einem Bereich der zwei Kammern unter dem Einlass (95) und dem Auslass (40) der Sekundärkammer (20) befindet;
**gekennzeichnet durch**
einen Abfallauslass (55) zum Ablassen eines Überrests (35) aus der Hauptkammer (10), wobei sich der Abfallauslass (55) zwischen dem ersten Auslass (30) der Hauptkammer (10) und der Verbindung zwischen der Hauptkammer (10) und der Sekundärkammer (20) befindet.

2. Drucksystem nach Anspruch 1, wobei der Einlass (95) über dem Abfallauslass (55) ist.

3. Drucksystem nach Anspruch 1, wobei der Einlass (95) unter dem Abfallauslass (55) ist.

4. Drucksystem nach Anspruch 1-3, umfassend einen zweiten Auslass (80) der Sekundärkammer (20) über dem Auslass (40) der Sekundärkammer (20).

5. Drucksystem nach Anspruch 4, wobei der zweite Auslass (80) der Sekundärkammer (20) auf der gleichen Höhe wie der erste Auslass (30) der Hauptkammer (10) ist.

6. Drucksystem nach einem der Ansprüche 1-5, das eine Trenneinheit umfasst, die mit dem ersten Auslass (30) der Hauptkammer (10) verbunden ist.

7. Drucksystem nach einem der Ansprüche 1-6, das einen zweiten Auslass (90) der Hauptkammer (10) umfasst, der zweite Auslass (90) der Hauptkammer (10) ist höher als der erste Auslass (30) der Hauptkammer (10).

8. Drucksystem nach einem der Ansprüche 1-7, welches ein Reinigungs-Pegelsystem (85) zum Aufhalten jeglichen in die Sekundärkammer gelangten Überrests leichteren Fluids umfasst, verbunden mit dem Auslass (40) der Sekundärkammer (20).

9. Drucksystem nach Anspruch 6 oder Anspruch 8, einen Auslaufauslass (105) des Reinigungs-Pegelsystems (85) umfassend, wobei der Auslaufauslass (105) zum Ablassen eines Überrests leichteren Fluids ist, das im Reinigungs-Pegelsystem gefangen ist.

10. Drucksystem nach Anspruch 1, wobei die flüssige Tinte ein Flüssigtoner ist und die Druckmaschine eingerichtet ist, den Flüssigtoner während des Druckens zu erhitzen, wobei die Trägerflüssigkeit verdampft.

11. Verfahren zum Entfernen von Abfall an der Grenzfläche einer Mischung (45) von Trägerflüssigkeit und Feuchtigkeit mit verschiedenen Dichten, kondensiert durch einen Kondensator eines Drucksystems, umfassend:

Leiten der Mischung (45) in ein System zum Trennen dieser Flüssigkeiten, wobei das System eine Hauptkammer (10) umfasst, die mit einer Sekundärkammer (20) verbunden ist, wobei die Verbindung unter einem Einlass (95) zur Hauptkammer und einem Auslass (40) aus der Sekundärkammer ist;
Ablassen von Überrest (35), das an einer Grenzschicht zwischen diesen Flüssigkeiten liegt, aus einem Abfallauslass (55), der dem System von der Hauptkammer (10) bereitgestellt wird; und
Ablassen der Flüssigkeit (15) mit der höheren Dichte durch den Auslass (40) aus der Sekundärkammer (20).

12. Verfahren nach Anspruch 11, wobei ein kontinuierlicher Fluss der Mischung (45) dem System zugeführt wird.

13. Verfahren nach Anspruch 11 oder Anspruch 12, des Weiteren umfassend Initialisierung der Trennung durch anfängliches Auffüllen des Systems mit der Flüssigkeit mit der höheren Dichte der beiden Flüssigkeiten, die getrennt werden sollen.

14. Verfahren nach einem der Ansprüche 11-13, des Weiteren umfassend Lüften in die Atmosphäre, um den Aufbau von Druck auf die Flüssigkeiten im System zu vermeiden.

15. Verfahren nach einem der Ansprüche 11-14, des Weiteren umfassend Bereitstellen von Sicherheitsauslässen, um Flüssigkeitsmischung infolge von Rückfluss wegen einer Störung in einem primären Auslass, zu vermeiden.

16. Verfahren nach einem der Ansprüche 11-15, des Weiteren umfassend Reinigen der Flüssigkeiten in einem sekundären Reinigungs-Pegelsystem.

17. Verfahren nach einem der Ansprüche 11-15, umfassend das Reinigen der Flüssigkeit, die aus der Sekundärkammer (20) abgelassen wurde.

18. Verfahren nach einem der Ansprüche 11-15, umfassend das Ablassen der Flüssigkeit (25) mit der niedrigeren Dichte durch einen Auslass (30) aus der Hauptkammer (10).

19. Verfahren nach Anspruch 18, umfassend das Reinigen der Flüssigkeit, die aus dem Auslass (30) der Hauptkammer (10) abgelassen wurde.

20. Verfahren nach Anspruch 11-18, umfassend:

Erhitzen von Flüssigtinte, die eine Trägerflüssigkeit enthält; und
Verdampfen der Trägerflüssigkeit.

21. Verfahren nach Anspruch 20, umfassend:

Verwenden eines flüssigen Kohlenwasserstoffs als Trägerflüssigkeit.

22. Verfahren nach Anspruch 21, umfassend:

Wiederverwenden des flüssigen Kohlenwasserstoffs.

**Revendications**

1. Système d'impression, comprenant :

■ un boîtier ;
■ un moteur d'impression à l'intérieur dudit boîtier, agencé pour utiliser de l'encre liquide comprenant un liquide porteur pour produire des images, une certaine partie dudit liquide porteur s'évaporant pendant l'impression ;

■ un condenseur pour condenser le liquide porteur de l'intérieur du boîtier, conjointement à l'humidité de l'air dans le boîtier.

■ un système pour recevoir le mélange condensé du liquide porteur et de l'humidité afin de séparer par gravité un mélange (45) de ces liquides ayant des gravités spécifiques différentes, le système comprenant :

■ une chambre principale (10) ayant une entrée (95) pour recevoir ledit mélange (45) et une première sortie (30) de la chambre principale (10) pour le liquide (25) ayant la plus basse gravité spécifique dudit mélange (45) ;

■ une chambre secondaire (20) ayant un raccordement pour recevoir le liquide (15) ayant la plus haute gravité spécifique dudit mélange (45) de ladite chambre principale (10), ledit raccordement étant situé entre une partie des deux chambres au-dessous de l'entrée (95) et de la sortie (40) de la chambre secondaire (20) ;

**caractérisé en ce que :**

une sortie de déchets (55) pour drainer un résidu (35) provenant de la chambre principale (10), la sortie de déchets (55) étant située entre la première sortie (30) de la chambre principale (10) et le raccordement entre la chambre principale (10) et la chambre secondaire (20).

**2.** Système d'impression selon la revendication 1, dans lequel ladite entrée (95) est au-dessus de ladite sortie de déchets (55).

**3.** Système d'impression selon la revendication 1, dans lequel ladite entrée (95) est au-dessous de ladite sortie de déchets (55).

**4.** Système d'impression selon les revendications 1 à 3, comprenant une seconde sortie (80) de la chambre secondaire (20), au-dessus de la sortie (40) de la chambre secondaire (20).

**5.** Système d'impression selon la revendication 4, dans lequel la seconde sortie (80) de la chambre secondaire (20) a la même hauteur que la première sortie (30) de la chambre principale (10).

**6.** Système d'impression selon l'une quelconque des revendications 1 à 5, comprenant une unité de séparation raccordée à la première sortie (30) de la chambre principale (10).

**7.** Système d'impression selon l'une quelconque des revendications 1 à 6, et comprenant une seconde sortie (90) de la chambre principale (10), la seconde sortie (90) de la chambre principale (10) étant plus grande que la première sortie (30) de la chambre principale (10).

**8.** Système d'impression selon l'une quelconque des revendications 1 à 7, comprenant un système de niveau de purification (85) pour bloquer les résidus de fluide plus léger qui passent dans la chambre secondaire, raccordé à la sortie (40) de la chambre secondaire (20).

**9.** Système d'impression selon la revendication 6 ou la revendication 8, comprenant une sortie de fuite (105) à partir du système de niveau de purification (85), dans lequel la sortie de fuite (105) est prévue pour drainer un résidu de fluide plus léger piégé dans le système de niveau de purification.

**10.** Système d'impression selon la revendication 1, dans lequel l'encre liquide est un toner liquide et dans lequel le moteur d'impression est agencé pour chauffer le toner liquide pendant l'impression, faisant évaporer le liquide porteur.

**11.** Procédé pour retirer des déchets à l'interface d'un mélange (45) de liquide porteur et d'humidité de différentes gravités spécifiques, condensé par un condenseur d'un système d'impression, comprenant les étapes consistant à :

■ diriger ledit mélange (45) dans un système pour séparer ces liquides, dans lequel le système comprend une chambre principale (10) raccordée à une chambre secondaire (20), le raccordement étant au-dessous d'une entrée (95) dans la chambre principale et d'une sortie (40) de la chambre secondaire ;

■ drainer les résidus (35) situé au niveau d'une interface entre ces liquides provenant d'une sortie de déchets (55) prévue sur ledit système à partir de la chambre principale (10) ; et

■ drainer le liquide (15) avec la plus grande gravité spécifique par la sortie (40) de la chambre secondaire (20).

**12.** Procédé selon la revendication 11, dans lequel un écoulement continu dudit mélange (45) est alimenté audit système.

**13.** Procédé selon la revendication 11 ou la revendication 12, comprenant en outre l'étape consistant à initialiser la séparation en remplissant dans un premier temps ledit système avec le liquide ayant la gravité spécifique la plus lourde des deux liquides qui sont séparés.

**14.** Procédé selon l'une quelconque des revendications 11 à 13, comprenant en outre l'étape consistant à évacuer dans l'atmosphère afin d'empêcher une accumulation de pression sur les liquides dans ledit système.

**15.** Procédé selon l'une quelconque des revendications 11 à 14, comprenant en outre l'étape consistant à prévoir la protection des sorties pour empêcher le mélange de liquide dû au refoulement provenant d'une perturbation dans une sortie principale.

**16.** Procédé selon l'une quelconque des revendications 11 à 15, comprenant en outre l'étape consistant à purifier lesdits liquides à un niveau de purification secondaire.

**17.** Procédé selon l'une quelconque des revendications 11 à 15, comprenant l'étape consistant à purifier le liquide drainé de la chambre secondaire (20).

**18.** Procédé selon l'une quelconque des revendications 11 à 15, comprenant l'étape consistant à drainer le liquide (25) avec la gravité spécifique la plus basse par une sortie (30) de la chambre principale (10).

**19.** Procédé selon la revendication 18, comprenant l'étape consistant à purifier le liquide drainé de la sortie (30) de la chambre principale (10).

**20.** Procédé selon les revendications 11 à 18, comprenant les étapes consistant à :

■ chauffer l'encre liquide comprenant un liquide porteur ; et
■ faire évaporer le liquide porteur.

**21.** Procédé selon la revendication 20, comprenant l'étape consistant à utiliser un hydrocarbure liquide en tant que liquide porteur.

**22.** Procédé selon la revendication 21, comprenant l'étape consistant à réutiliser l'hydrocarbure liquide.

FIG.1

FIG.2

EP 1 626 791 B1

FIG.3

FIG.4

FIG.5

FIG.6

EP 1 626 791 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4689155 A, Knowlton
- US 5637234 A, McCasland
- US 4538899 A
- EP 0969332 A
- US 5708938 A